# EUROPÄISCHE PATENTSCHRIFT

(11) **EP 0 694 360 B1**
(45) Veröffentlichungstag und Bekanntmachung des Hinweises auf die Patenterteilung: **03.09.1997**
(21) Anmeldenummer: 95109264.2
(22) Anmeldetag: 14.06.1995
(51) Int. Cl.: B23K 9/32

(54) **Vorrichtung zum Sprühen eines Antihaftmittels gegen Schweissspritzer in die Gasdüse eines Schutzgas-Schweissbrenners**
Device for spraying a non-stick product used against welding spatters in the gaz nozzle of a protective gaz welding torch
Dispositif pour pulvériser un moyen anti-collant pour éviter des gouttelettes de soudage dans la tuyère à gaz d'un chalumeau à souder sous gaz de protection

(30) Priorität: 29.07.1994 DE 4426993
(43) Veröffentlichungstag der Anmeldung: 31.01.1996
(73) Patentinhaber: Hoffmann, Hans, A-5026 Salzburg (AT)
(72) Erfinder: Hoffmann, Hans, A-5026 Salzburg (AT)
(74) Vertreter: Haft, von Puttkamer, Berngruber, Czybulka

(56) Entgegenhaltungen:
- EP-A- 0 090 233
- WO-A-94/12312
- DE-A- 2 943 650
- DE-A- 3 421 885
- DE-A- 3 816 912
- DE-U- 8 810 483
- US-A- 4 778 976

## Beschreibung

Die Erfindung bezieht sich auf eine Vorrichtung zum Sprühen eines Antihaftmittels gegen Schweißspritzer in die Gasdüse eines Schutzgas-Schweißbrenners nach dem Oberbegriff des Anspruchs 1.

In der Gasdüse eines Schutzgas-Schweißbrenners ist die Stromkontaktdüse angeordnet, durch die sich die Drahtelektrode erstreckt. Das hintere Ende der Stromkontaktdüse ragt in den hülsenförmigen Düsenstock, der Querbohrungen zum Durchtritt des Schutzgases in den ringspaltförmigen Freiraum zwischen der Gasdüseninnenwand einerseits und der Außenwand der Stromkontaktdüse und des Düsenstocks andererseits aufweist. Dieser Freiraum muß von Schweißspritzern der abschmelzenden Drahtelektrode freigehalten werden, um die Funktion des Schweißbrenners nicht zu beeinträchtigen.

Dazu werden Antihaftmittel oder Trennmittel gegen das Anhaften von Schweißspritzer verwendet, meist Lösungen von Fetten oder Ölen in organischen Lösungsmitteln oder wäßrigen Öl-Emulsionen.

Die Antihaftmittel werden im allgemeinen mit Sprüheinrichtungen, die mit Druckluft betrieben werden, in die Gasdüse gesprüht (vgl. DE 89 07 120 U1 und DE 36 27 492 C2). Das Antihaftmittel wird dabei einem Vorratsbehälter entnommen. Um sicherzustellen, daß sich dieser nicht entleert, ist nach DE 36 27 492 C2 ein Zentralbehälter vorgesehen, durch den der Vorratsbehälter mittels einer Pumpe und eines Magnetventils, das von einem Schwimmer im Vorratsbehälter betätigt wird, nachgefüllt wird. Wenn keine Druckluft zur Verfügung steht, werden zum Auftragen des Antihaftmittels entweder Treibgasspraydosen verwendet, oder in neuerer Zeit aus Gründen des Umweltschutzes Sprayeinrichtungen mit einer Handpumpe. Das Antihaftmittel 7 soll aus Kostengründen als möglichst dünner Film auf die den erwähnten Freiraum in der Gasdüse begrenzenden Flächen aufgetragen werden. Es soll also eine kleine Menge zu möglichst feinen Tröpfchen versprüht werden. Mit der Handpumpen-Sprüheinrichtung läßt sich eine feine Zerstäubung nicht erreichen.

Sowohl die Spraydose wie die Handpumpen-Sprüheinrichtung besitzen ferner den Nachteil, daß man Umgreifen muß. Das heißt, man muß bei jedem Sprühvorgang die Schutzgas-Schweißpistole, die man in einer Hand hält, erst niederlegen und loslassen, dann mit der Arbeitshand zur Spraydose bzw. zur Handpumpe greifen, das Antihaftmittel auftragen, die Spraydose bzw. die Handpumpen-Sprüheinrichtung abstellen und dann die Schweißpistole wieder ergreifen.

Hinzu kommt, daß das Treibgas bzw. die Luft, die nach dem Stand der Technik zum Einsprühen verwendet werden, in die Schutzgaszuführung des Schweißbrenners hineingedrückt werden, so daß die Schutzgaszuführung erst mit Schutzgas gespült werden muß, bevor der Schweißvorgang wieder aufgenommen werden kann.

Aus EP-A-0 090 233 ist eine Vorrichtung zum Sprühen eines Antihaftmittels gegen Schweißspritzer in die Gasdüse eines Spritzgas-Schweißbrenners bekannt, welche einen Antihaftmittelbehälter aufweist, der über eine Antihaftmittel-Dosiereinrichtung mit einer Sprühdüse verbunden ist. Die Schutzgasquelle des Schweißbrenners ist über eine Leitung, die mit einem Schutzgasabsperrorgan versehen ist, mit der Sprühdüse verbunden. Ferner ist eine Betätigungsvorrichtung zur Betätigung des Schutzgas-Absperrorgans und der Antihaftmittel-Dosiereinrichtung vorgesehen. Die Sprühdüse ist durch Drücken des Schweißbrenners gegen die Betätigungseinrichtung betätigbar.

Mit der bekannten Vorrichtung ist jedoch keine hinreichende genaue Dosierung des Haftmittels möglich. Wenn sich der Staudruck in der Leitung zwischen der Schutzgasquelle und der Sprühdüse ändert, kann dies nämlich zu erheblichen Abweichungen der Menge des angesaugten Antihaftmittels führen. Zudem ist der Staudruck in dieser Leitung relativ gering, so daß keine ausreichend feinen Tröpfchen aus der Sprühdüse austreten, zumal derartige Antihaftmittel aufgrund ihrer hohen Oberflächenspannung ohnehin relativ schwierig zu feinen Tröpfchen zu versprühen sind.

Aufgabe der Erfindung ist es daher, eine vorgegebene, genau dosierte kleine Menge des Antihaftmittels in Form möglichst kleiner Tröpfchen in die Gasdüse eines Schweißbrenners zu sprühen.

Dies wird erfindungsgemäß mit dem Anspruch 1 gekennzeichneten Vorrichtung erreicht. In den Unteransprüchen sind vorteilhafte Ausgestaltungen der Erfindung wiedergegeben.

Das Schutzgas, das im allgemeinen ein Edelgas, wie Helium oder Argon, oder Kohlendioxid ist, wird beim Lichtbogen-Schweißen einer Schutzgasquelle, meist einem Behälter entnommen, in dem es unter einem Druck von z. B. 4 bis 6 bar steht. Der in Flußrichtung nachfolgende Druckminderer dient zur Einstellung der für die Schutzgasschweißung benötigten Gasmenge. Damit wird mit einem relativ geringen Fließdruck von z. B. 0,1 bar ein für die Schutzgasschweißung optimaler Schutzgas-Volumenstrom von im allgemeinen zwischen 8 und 20 l/min erzeugt.

Der Gasfluß zum Schutzgasschweißbrenner wird durch ein Magnetventil in der Schweißmaschine freigegeben bzw. gesperrt. Bei geschlossenem Ventil entsteht in der Zuleitung zwischen Druckminderer und Magnetventil ein Staudruck von z. B. 4 bis 6 bar.

Da dieser Fließdruck nicht ausreicht, um das Antihaftmittel zu versprühen, ist erfindungsgemäß ein Schutzgas-Speicher vorgesehen, der einerseits an die Schutzgasquelle angeschlossen ist und andererseits über ein Absperrorgan an die Sprühdüse. Damit steht für den Sprühvorgang eine ausreichende Gasmenge unter einem ausreichend hohen Druck von z. B. 4 bis 6 bar zum Versprühen des Antihaftmittels zur Verfügung.

Durch die Verwendung von Schutzgas wird zugleich die Entzündlichkeit des Ahtihaftmittel-Sprühnebels wesentlich reduziert. Zudem wird beim Einsprühen der Gasdüse durch Verwendung des Schutzgases als Sprühgas die Gasatmosphäre in dem Brenner nicht verändert. D. h., die Schutzgaszuführung in dem Schweißbrenner braucht nicht mit Schutzgas gespühlt zu werden, bevor der Schweißvorgang wieder aufgenommen wird.

Der Schutzgas-Speicher ist vorzugsweise an die Schutzgas-Leitung angeschlossen, die von der Schutzgasquelle zu dem Schweißbrenner führt. Das Ventil oder sonstige Absperrorgan, über das dem Schweißbrenner das Schutzgas zugeführt wird, ist stromabwärts von dem Speicher an die Schutzgas-Leitung angeschlossen. Beim Schließen dieses Ventils entsteht somit in dem Schutzgas-Speicher ein der Schutzgasquelle in Kombination mit Druckminderer entsprechender Staudruck von z. B. 4 bis 6 bar.

Die erfindungsgemäße Vorrichtung weist ferner eine Dosiereinrichtung für das Antihaftmittel auf, die an den Antihaftmittelbehälter angeschlossen ist, wobei Dosiereinrichtung und Antihaftmittelbehälter eine Einheit bilden können.

Die Dosiereinrichtung wird durch eine Verdrängerpumpe gebildet, beispielsweise eine Kolbenpumpe, die durch einen Kolbenhub eine vorgegebene Menge Antihaftmittel zur Sprühdüse fördert. Durch die Kombination der Dosiereinrichtung mit der Zerstäubung des Antihaftmittels durch das Schutzgas unter dem hohen Staudruck der Schutzgasquelle ist es möglich, eine definierte Antihaftmittelmenge zu feinsten Tröpfchen mit einem durchschnittlichen Tröpfchendurchmesser von beispielsweise 10 bis 50 µ zu vernebeln und damit eine optimale Azitihaftmittelbenetzung von Gasdüse, Kontaktrohr und Düsenstock zu erzielen.

Der Antihaftmittelbehälter kann auch mit dem Gasspeicher verbunden sein, so daß das Trennmittel durch den Gasdruck der Dosierpumpe zugeführt wird. Der Gasspeicher und der Trennmittelbehälter können ferner aus einem Behälter bestehen, so daß das Freivolumen über dem Trennmittel als Gasspeicher dient.

Das Antihaftmittel liegt vorzugsweise in flüssiger Form vor, es kann jedoch gegebenenfalls auch eine pastöse Konsistenz aufweisen.

Zur gleichzeitigen Betätigung des Schutzgas-Absperrorgans und der Antihaftmittel-Dosiereinrichtung ist eine Betätigungseinrichtung vorgesehen. An der Betätigungseinrichtung ist ein Anschlag angebracht, gegen den der Schweißbrenner mit der Gasdüse gedrückt wird, um die Sprühdüse zu betätigen. Damit ist beim Einsprühen der Gasdüse eine Einhandbetätigung ohne Umgreifen aus der Arbeitshaltung mit der Schutzgas-Schweißpistole möglich.

Die Sprühdüse kann an der Betätigungseinrichtung vorgesehen sein. Es ist jedoch auch möglich, die Sprühdüse stationär, also z. B. gehäusefest auszubilden.

Neben der dosierbaren Antihaftmittelmenge ist auch die Schutzgasmenge je Betätigung der Betätigungseinrichtung durch Wahl der Schutzgas-Speichergröße möglich. D. h., falls z. B. eine Schutzgasmenge von 0,2 l bei einem Staudruck der Schutzgasquelle von 5 bar zum Versprühen der vorgegebenen Antihaftmittelmenge ausreicht, wird ein entsprechend großer Schutzgas-Speicher verwendet.

Das Schutzgas-Absperrorgan kann ein Ventil oder ein Hahn sein mit drei Zugängen, nämlich zur Schutzgasquelle bzw. Schutzgas-Leitung, zum Schutzgas-Speicher und zur Sprühdüse, wobei zumindest der Zugang zum Schutzgas-Speicher mit den beiden anderen Zugängen verbindbar sein muß.

Der Schutzgas-Speicher kann durch eine vorzugsweise um den Antihaftmittelbehälter angeordnete Wendel aus einem Rohr oder einem Schlauch gebildet sein. Da ein solches Rohr bzw. Schlauch ein Standard-Handelsprodukt sein kann, braucht kein kostspieliger separater Behälter gefertigt zu werden. Zugleich ist ein solcher als Rohrwendel um den Antihaftmittelbehälter angeordneter Schutzgas-Speicher platzsparend und stellt einen Schutz für den Antihaftmittelbehälter dar.

Da die Drahtelektrode aus der Gasdüse ragt, wird der Schweißbrenner gegen einen Anschlag gedrückt, der im Abstand von der Sprühdüse angeordnet ist und die Gasdüse aufnimmt. Dieser Anschlag wird vorzugsweise durch das Ende einer Hülse gebildet, in der die Sprühdüse am anderen Ende angeordnet ist. Damit wird das versprühte Antihaftmittel über die Hülse dem Innenraum der Gasdüse zugeführt. Um das Andrücken und Zentrieren der Gasdüse zu erleichtern, kann die Hülse als Anschlag einen sich trichterförmig erweiternden Abschnitt aufweisen.

Die Betätigungseinrichtung wird vorzugsweise durch einen Betätigungshebel gebildet, an dessen einem Ende die Sprühdüse angeordnet ist. Die Betätigungseinrichtung kann jedoch auch anders ausgebildet sein, beispielsweise als elektrischer Schalter, wobei dann das Schutzgas-Absperrorgan sowie die Dosiereinrichtung vorzugsweise elektrisch betätigbar ausgebildet sind.

Die Betätigungseinrichtung wird nach jeder Betätigung in ihre Ruhestellung zurückgeholt. Dazu kann eine entsprechende Rückholfeder vorgesehen sein. Nach einer bevorzugten Ausführungsform der Erfindung kann die Rückholung der Betätigungseinrichtung dadurch erfolgen, daß der Schutzgas-Speicher als Pneumatikzylinder ausgebildet wird, wobei die Betätigungseinrichtung durch Füllen des Pneumatikzylinders mit Schutzgas in ihre Ruhestellung zurückgeholt wird. Der Pneumatikzylinder kann dann zugleich die Antihaftmittel-Dosiereinrichtung betätigen.

Nachstehend ist die Erfindung anhand der beigefügten Zeichnung näher erläutert. Darin zeigen:
- Fig. 1: eine schematische Darstellung einer Ausführungsform der erfindungsgemäßen Vorrichtung, und
- Fig. 2: eine teilweise geschnittene Ansicht einer anderen Ausführungsform.

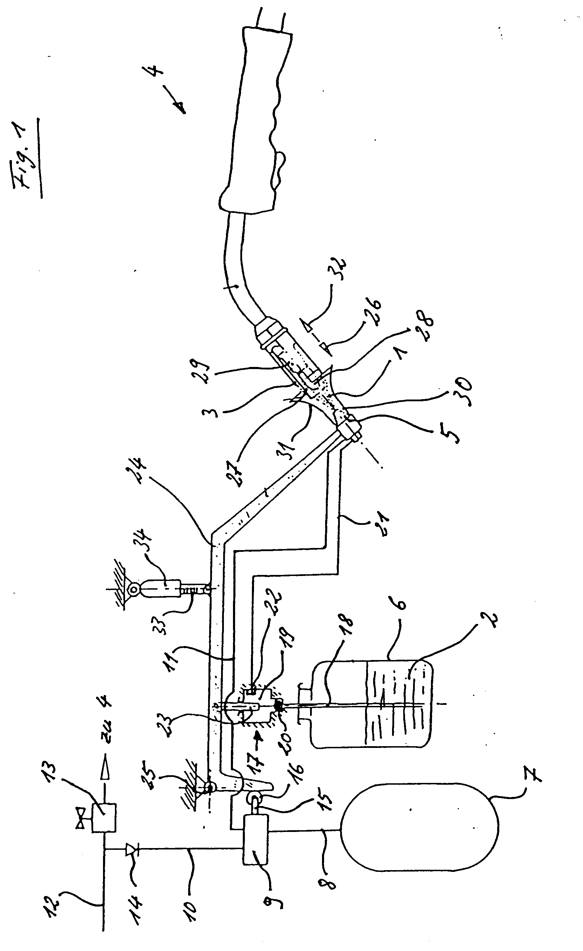

Gemäß Fig. 1 weist die Vorrichtung zum Sprühen eines Sprühnebels 1 eines Antihaftmittels 2 gegen Schweißspritzer in die Gasdüse 3 eines Handschweißbrenners oder Schweißpistole 4 eine Sprühdüse 5, einen Antihaftmittelbehälter 6 und einen Schutzgas-Speicher 7 auf.

Der Schutzgas-Speicher 7 ist über eine Leitung 8 an den einen Zugang eines Ventils oder dergleichen Schutzgas-Absperrorgan 9 angeschlossen, an dessen beide anderen Zugänge die Leitungen 10, 11 angeschlossen sind. Die Leitung 10 ist an die Schutzgas-Leitung 12 angeschlossen, die den nicht dargestellten Schutzgas-Behälter als Schutzgasquelle mit dem Schweißbrenner 4 verbindet, um der Gasdüse 3 das Schutzgas zuzuführen, das beim Lichtbogen-Schweißen Reaktionen der Schmelze mit der Außenatmosphäre verhindern soll. Der Anschluß der Leitung 10 erfolgt stromabwärts von dem z. B. als Magnetventil ausgebildeten Absperrorgan 13, mit dem die Schutzgaszufuhr zum Schweißbrenner 4 gesteuert wird. In der Leitung 10 ist ein Rückschlagventil 14 vorgesehen.

Der Ventilkörper oder -hahn des Absperrorgans 9 wird durch einen Stößel oder Hebel 15 betätigt, der mit einem Rädchen 16 versehen ist. Über die Leitung 11 ist der Schutzgas-Speicher 7 an die Sprühdüse 5 angeschlossen. In der in Fig. 1 dargestellten Ruhestellung der Vorrichtung verbindet das Absperrorgan 9 die Leitungen 8 und 10, während die Leitung 11 abgesperrt ist. Das Absperrorgan 9 kann beispielsweise ein mechanisches 2/3-Wegeventil sein.

Zur Dosierung des flüssigen Antihaftmittels 2 ist eine Dosierpumpe 17 vorgesehen, die als Kolbenpumpe ausgebildet ist. D. h., an der Mündung einer Leitung 18, die in das Antihaftmittel 2 in dem Antihaftmittelbehälter 6 eintaucht und damit den Raum 19 der Dosierpumpe 17 mit dem Antihaftmittelbehälter 6 verbindet, ist ein Saugventil 20 vorgesehen. Der Raum 19 ist mit der Sprühdüse 5 über eine Leitung 21 verbunden, die mit dem Druckventil 22 der Kolbenpumpe verschließbar ist. In den Raum 19 taucht ein Verdrängerkolben 23 ein. Der Raum 19 ist mit Antihaftmittel 2 gefüllt. Das Volumen des Kolbens 23, das bei einem Hub in den Raum 19 eintaucht, bestimmt die Menge des Antihaftmittels, das der Sprühdüse 5 zugeführt wird.

Das Schutzgas-Absperrorgan 9 und die Dosierpumpe 17, bzw. der Kolben 23, werden vorzugsweise zugleich betätigt, also der Sprühdüse 5 zur gleichen Zeit über die Leitung 11 das unter Druck stehende Schutzgas und das Antihaftmittel 2 zugeführt, um den Sprühnebel 1 zu bilden.

Dazu ist ein Betätigungshebel 24 vorgesehen, der um die Hebelachse 25 drehbar an der Vorrichtung angelenkt ist. An dem freien Ende des längeren Hebelarms des zweiarmigen Betätigungshebels 24 ist die Sprühdüse 5 angeordnet. An dem abgewinkelten kurzen Hebelarm greift der Stößel oder Hebel 15 mit dem Rädchen 16 an. Zwischen der Drehachse 25 und der Sprühdüse 5 ist der Kolben 23 der Dosierpumpe 17 angelenkt.

Um das Antihaftmittel 2 in die Gasdüse 3 zu sprühen, wird der Schweißbrenner 4, der mit einer Hand am Handgriff 25 gehalten wird, in Richtung des Pfeiles 26 gegen die Sprühdüse 5 gedrückt.

Dadurch wird der Betätigungshebel 24 in Fig. 1 im Uhrzeigersinn gedreht, wodurch der Stößel bzw. Hahn 15 die Leitung 11 mit der Leitung 8 und damit den Schutzgas-Speicher 7 mit der Sprühdüse 5 verbindet. Gleichzeitig wird der Kolben 23 in den mit Antihaftmittel 2 gefüllten Raum 19 der Dosierpumpe 17 tiefer eingetaucht, so daß bei geschlossenem Saugventil 20 und geöffnetem Druckventil 22 eine entsprechende Antihaftmittelmenge in die Sprühdüse 5 gelangt. In der Sprühdüse 5 wird das Antihaftmittel 2 durch das unter Druck stehende Schutzgas in den feinen Sprühnebel 1 übergeführt. Die Sprühdüse 5 weist dazu eine nicht dargestellte Zerstäubungskammer auf, die mit einem Drallkörper versehen sein kann.

Der Sprühnebel 1 gelangt in den ringspaltförmigen Freiraum 27 zwischen der Sprühdüse 5 und der Stromkontaktdüse 28 und dem sich daran anschließenden Düsenstock 29. Damit werden die Flächen, die den Freiraum 27 begrenzen, mit einem dünnen Antihaftmittelfilm bedeckt, so daß sich an diesen Flächen keine Schweißspritzer festsetzen können.

Da die nicht dargestellte Drahtelektrode sich von der Stromkontaktdüse 28 in Richtung der Sprühdüse 5 erstreckt, also vorne aus der Gasdüse 3 herausragt, ist ein Anschlag an dem Betätigungshebel 24 für die Gasdüse 3 erforderlich, der in einem entsprechenden Abstand von der Sprühdüse 5 angeordnet ist. Gemäß Fig. 1 wird dieser Anschlag durch eine Hülse 30 gebildet, in der die Sprühdüse 5 an einem Ende sitzt, während der von der Sprühdüse 5 abgewandte Abschnitt 31 trichterförmig ausgebildet ist. Durch die trichterförmige Ausbildung wird das Andrücken der Gasdüse 3 erleichtert und die Gasdüse 3 zugleich zentriert. Die Hülse 30 verhindert das Austreten des Sprühnebels 1 in die Umgebung.

Wenn der Sprühvorgang beendet ist, wird die Schweißpistole 4 entsprechend dem Pfeil 32 von der Hülse 30 wegbewegt. Damit sich der Betätigungshebel 24 in die Ruhestellung in Fig. 1 im Gegenuhrzeigersinn zurückdreht, ist eine Rückholfeder 33 vorgesehen, die einerseits am Hebel 24 und andererseits stationär, also an der Vorrichtung befestigt ist. Ferner wird der Hebelweg durch einen an der Vorrichtung befestigten Anschlag 34 begrenzt.

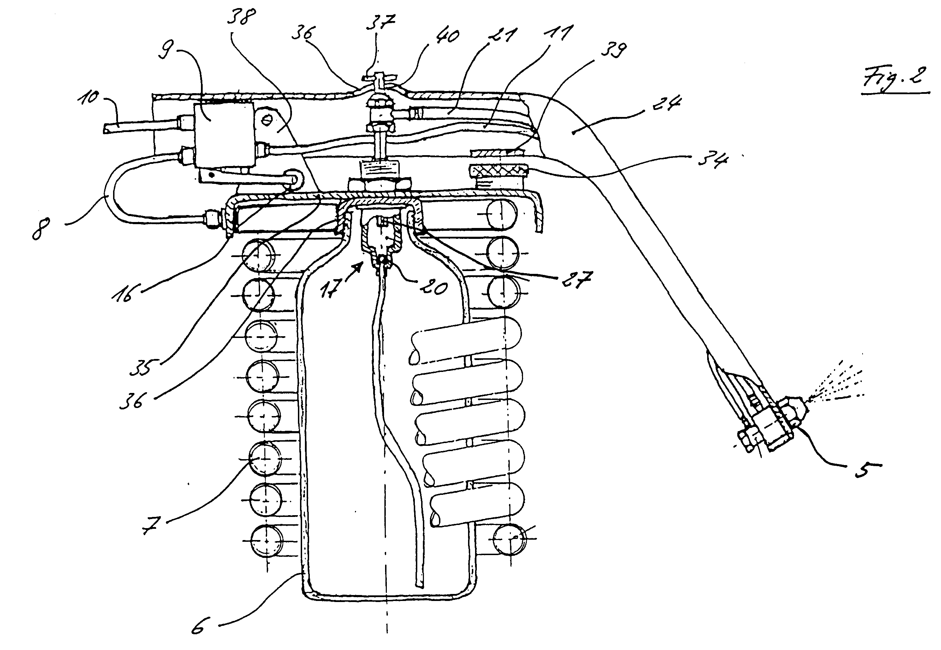

Bei der Ausführungsform nach Fig. 2, in der gleiche Teile mit den gleichen Bezugsziffern versehen sind wie in Fig. 1, ist eine tellerförmige Grund- oder Befestigungsplatte 35 vorgesehen. An der Unterseite der Befestigungsplatte 35 ist eine Schraubkappe 36 befestigt, an die der als Flasche ausgebildete Antihaftmittelbehälter 6 angeschraubt ist.

Die Dosierpumpe 17 ist im oberen Bereich des Antihaftmittelbehälters 6 angeordnet. Der Kolben 27 der Dosierpumpe 17 ist rohrförmig ausgebildet. An seinem oberen Ende ist die Leitung 21 angeschlossen, die zur Sprühdüse 5 führt. Das nicht dargestellte Druckventil der Dosierpumpe 17 ist vorzugsweise in der Leitung 21 kurz vor der Sprühdüse 5 angeordnet. Die gelenkige Verbindung des Kolbens 27 mit dem Betätigungshebel 24 erfolgt durch einen einen Längsschlitz 36 in dem Betätigungshebel 24 durchragenden Zapfen 40 am Kolben 27, der an seinem den Schlitz 36 durchragenden Ende mit einer Scheibe 37 versehen ist.

Der Schutzgas-Speicher 7 ist als sich um den Antihaftmittelbehälter 6 erstreckende Rohrwendel ausgebildet und mit seinem die Speicheröffnung bildenden Ende an dem Rand der tellerförmigen Befestigungsplatte 35 befestigt.

Der Betätigungshebel 24 ist an einem auf der Befestigungsplatte 35 befestigten Lagerbock 38 angelenkt. Das als mechanisches 2/3-Wegeventil ausgebildete Absperrorgan 9 ist am Betätigungshebel 24 befestigt. Sein Rädchen 16 rollt auf der Befestigungsplatte 35 ab.

Um den Weg des Betätigungshebels 24 zu begrenzen, ist auf der Befestigungsplatte 35 ein Anschlag 34 vorgesehen, der mit einem Anschlag 39 an dem Betätigungshebel 24 zusammenwirkt. Der Anschlag 34 kann schraubbar ausgebildet sein, um den Weg des Betätigungshebels 24 einstellen zu können. Zwischen den beiden Anschlägen 34 und 39 kann eine nicht dargestellte Druckfeder als Rückholfeder vorgesehen sein.

Die Sprühdüse 5 muß nicht am Betätigungshebel 24 angeordnet sein. So ist es z. B. möglich, die Sprühdüse 5 hinter dem Betätigungshebel stationär, also an der Vorrichtung anzubringen und den Betätigungshebel 24 im Bereich der Sprühdüse mit einer Öffnung zu versehen, die als Anschlag für die Gasdüse 3 des Handschweißbrenners 4 dient. Bei Betätigung des Betätigungshebels 24 durch Drücken der Gasdüse an diesem Anschlag, wird dann die Sprühdüse betätigt, die in diesem Fall den Sprühnebel durch diese Öffnung hindurch in die Gasdüse 3 sprüht.

Anstelle des über die Leitung 8 an das Dreiwegeventil 9 angschlossenen Schutzgasspeichers 7 gemäß Fig. 1 und 2 kann der Schutzgasspeicher auch durch eine entsprechend groß dimensionierte Leitung 10 zwischen der Schutzgasleitung 12 bzw. dem Rückschlagventil 14 und dem Absperrorgan 9 gebildet sein. Das Absperrorgan 9 ist dann als Zweiwegeventil ausgebildet.

## Patentansprüche

1. Vorrichtung zum Sprühen eines Antihaftmittels gegen Schweißspritzer in die Gasdüse (3) eines Schutzgas-Schweißbrenners (4), mit einem Antihaftmittelbehälter (6), einer Sprühdüse (5), einer Schutzgasquelle, die über ein Schutzgas-Absperrorgan (9) mit der Sprühdüse (5) verbunden ist, einer Antihaftmittel-Dosierpumpe (17), über die der Antihaftmittelbehälter (6) mit der Sprühdüse (5) verbunden ist, und einer Betätigungseinrichtung zur Betätigung des Schutzgas-Absperrorgans (9) und der Antihaftmittel-Dosiereinrichtung, wobei die Sprühdüse (5) durch Drücken des Schweißbrenners (4) gegen die Betätigungseinrichtung betätigbar ist, dadurch gekennzeichnet, daß an die Schutzgasquelle ein Schutzgas-Speicher (7) angeschlossen ist, die Dosierpumpe (17) und der Schutzgas-Speicher (7) über je eine Leitung (21 bzw. 11) an die Sprühdüse (5) angeschlossen sind, das Schutzgas-Absperrorgan (9) in der Leitung (11) von dem Schutzgas-Speicher (7) zu der Sprühdüse (5) vorgesehen ist und die Dosierpumpe (17) durch eine Verdrängerpumpe gebildet wird.

2. Vorrichtung nach Anspruch 1, dadurch gekennzeichnet, daß eine Rückholfeder (33) für die Betätigungseinrichtung vorgesehen ist.

3. Vorrichtung nach Anspruch 1, dadurch gekennzeichnet, daß der Schutzgas-Speicher als Pneumatikzylinder ausgebildet ist und die Betätigungseinrichtung durch Füllen des Pneumatikzylinders mit Schutzgas rückholbar ist.

4. Vorrichtung nach Anspruch 3, dadurch gekennzeichnet, daß der Pneumatikzylinder zugleich die Antihaftmittel-Dosiereinrichtung betätigt.

5. Vorrichtung nach Anspruch 1, dadurch gekennzeichnet, daß der Schweißbrenner (4) mit der Gasdüse (3) gegen einen im Abstand von der Sprühdüse (5) angeordneten Anschlag drückbar ist.

6. Vorrichtung nach Anspruch 5, dadurch gekennzeichnet, daß der Anschlag an dem einen Ende einer Hülse (30) angeordnet ist.

7. Vorrichtung nach Anspruch 6, dadurch gekennzeichnet, daß der Anschlag durch einen trichterförmig erweiterten Abschnitt (31) der Hülse (30) gebildet wird.

8. Vorrichtung nach einem der vorstehenden Ansprüche, dadurch gekennzeichnet, daß die Betätigungseinrichtung durch einen Betätigungshebel (24) gebildet wird.

9. Vorrichtung nach Anspruch 1 und 8, dadurch gekennzeichnet, daß der Verdrängerkörper der Verdrängerpumpe an dem Betätigungshebel (24) angelenkt ist.

10. Vorrichtung nach einem der vorstehenden Ansprüche, dadurch gekennzeichnet, daß der Schutzgas-Speicher (7) über ein Rückschlagventil (14) mit der Schutzgasquelle des Schweißbrenners (4) verbunden ist.

11. Vorrichtung nach einem der vorstehenden Ansprüche, dadurch gekennzeichnet, daß der Schutzgas-Speicher (7) an die Schutzgas-Leitung (12) angeschlossen ist, die die Schutzgasquelle mit dem Schweißbrenner (4) verbindet, wobei das Absperrorgan (13) in der Schutzgas-Leitung (12) zur Zufuhr des Schutzgases zum Schweißbrenner (4) stromabwärts von dem Schutzgas-Speicher (7) angeordnet ist.

12. Vorrichtung nach einem der vorstehenden Ansprüche, dadurch gekennzeichnet, daß der Schutzgas-Speicher (7) durch eine um den Antihaftmittelbehälter (6) angeordnete Rohrwendel gebildet wird.

13. Vorrichtung nach einem der vorstehenden Ansprüche, dadurch gekennzeichnet, daß der Schutzgas-Speicher (7) durch die Leitung (10) zwischen der Schutzgas-Leitung (12) und dem Absperrorgan (9) gebildet wird.

## Claims

1. An apparatus for spraying an antistick agent against spatters into the gas nozzle (3) of an inert gas welding torch (4), having an antistick agent container (6), a spray nozzle (5), an inert gas source connected with the spray nozzle (5) via an inert gas shut-off device (9), an antistick agent metering pump (17) via which the antistick agent container (6) is connected with the spray nozzle (5), and an operating device for operating the inert gas shut-off device (9) and the antistick agent metering device, the spray nozzle (5) being operable by the welding torch (4) being urged against the operating device, characterized in that an inert gas accumulator (7) is connected to the inert gas source, the metering pump (17) and the inert gas accumulator (7) are each connected to the spray nozzle (5) via a line (21, 11), the inert gas shut-off device (9) is provided in the line (11) from the inert gas accumulator (7) to the spray nozzle (5), and the metering pump (17) is formed by a positive-displacement pump.

2. The apparatus of claim 1, characterized in that a restoring spring (33) is provided for the operating device.

3. The apparatus of claim 1, characterized in that the inert gas accumulator is formed as a pneumatic cylinder and the operating device is adapted to be restored by the pneumatic cylinder being filled with inert gas.

4. The apparatus of claim 3, characterized in that the pneumatic cylinder at the same time operates the antistick agent metering device.

5. The apparatus of claim 1, characterized in that the welding torch (4) is adapted to be urged with the gas nozzle (3) against a stop spaced from the spray nozzle (5).

6. The apparatus of claim 5, characterized in that the stop is disposed at one end of a sheath (30).

7. The apparatus of claim 6, characterized in that the stop is formed by a funnel-shaped flared portion (31) of the sheath (30).

8. The apparatus of any of the above claims, characterized in that the operating device is formed by an operating lever (24).

9. The apparatus of claims 1 and 8, characterized in that the displacer of the positive-displacement pump is hinged on the operating lever (24).

10. The apparatus of any of the above claims, characterized in that the inert gas accumulator (7) is connected with the inert gas source of the welding torch (4) via a check valve (14).

11. The apparatus of any of the above claims, characterized in that the inert gas accumulator (7) is connected to the inert gas line (12) connecting the inert gas source with the welding torch (4), the shut-off device (13) being disposed downstream of the inert gas accumulator (7) in the inert gas line (12) for supplying inert gas to the welding torch (4).

12. The apparatus of any of the above claims, characterized in that the inert gas accumulator (7) is formed by a coiled tube disposed around the antistick agent container (6).

13. The apparatus of any of the above claims, characterized in that the inert gas accumulator (7) is formed by the line (10) between the inert gas line (12) and the shut-off device (9).

## Revendications

1. Dispositif pour pulvériser un produit antiadhésif pour éviter des gouttelettes de soudage dans la tuyère à gaz (3) d'un chalumeau à souder (4) sous gaz de protection, comportant un récipient de produit anti-adhésif (6), une tuyère de pulvérisation (5), une source de gaz de protection qui est reliée à la tuyère de pulvérisation (5) par l'intermédiaire d'un organe d'obturation (9) de gaz de protection, une pompe de dosage (17) de produit antiadhésif par l'intermédiaire de laquelle le récipient de produit antiadhésif (6) est relié à la tuyère de pulvérisation (5), et un dispositif d'actionnement pour actionner l'organe d'obturation (9) de gaz de protection et le dispositif de dosage du produit antiadhésif, la tuyère de pulvérisation (5) étant actionnable en pressant le chalumeau à souder (4) contre le dispositif d'actionnement, caractérisé en ce qu'un réservoir de gaz de protection (7) est raccordé à la source de gaz de protection, en ce que la pompe de dosage (17) et le réservoir de gaz de protection (7) sont chacun raccordés à la tuyère de pulvérisation (5) par l'intermédiaire d'une conduite respective (21, 11), en ce que l'organe d'obturation (9) de gaz de protection est prévu dans la conduite (11) allant du réservoir de gaz de protection (7) vers la tuyère de pulvérisation (5) et en ce que la pompe de dosage (17) est formée par une pompe volumétrique.

2. Dispositif selon la revendication 1, caractérisé en ce qu'un ressort de rappel (33) est prévu pour le dispositif d'actionnement.

3. Dispositif selon la revendication 1, caractérisé en ce que le réservoir de gaz de protection est réalisé sous forme de cylindre pneumatique et en ce que le dispositif d'actionnement est susceptible d'être rappelé en remplissant le cylindre pneumatique de gaz de protection.

4. Dispositif selon la revendication 3, caractérisé en ce que le cylindre pneumatique actionne simultanément le dispositif de dosage de produit antiadhésif.

5. Dispositif selon la revendication 1, caractérisé en ce que le chalumeau à souder (4) est susceptible d'être pressé avec la tuyère de gaz (3) contre une butée agencée à distance de la tuyère de pulvérisation (5).

6. Dispositif selon la revendication 5, caractérisé en ce que la butée est agencée sur l'une des extrémités d'une douille (30).

7. Dispositif selon la revendication 6, caractérisé en ce que la butée est formée par un tronçon (31) de la douille (30) qui est évasé en forme d'entonnoir.

8. Dispositif selon l'une quelconque des revendications précédentes, caractérisé en ce que le dispositif d'actionnement est formé par un levier d'actionnement (24).

9. Dispositif selon les revendications 1 et 8, caractérisé en ce que le corps volumétrique de la pompe volumétrique est articulé sur le levier d'actionnement (24).

10. Dispositif selon l'une quelconque des revendications précédentes, caractérisé en ce que le réservoir de gaz de protection (7) est relié à la source de gaz de protection dit chalumeau à souder (4) par l'intermédiaire d'une soupape de non-retour (14).

11. Dispositif selon l'une quelconque des revendications précédentes, caractérisé en ce que le réservoir de gaz de protection (7) est raccordé à la conduite de gaz de protection (12) qui relie la source de gaz de protection au chalumeau à souder (4), l'organe d'obturation (13) étant agencé dans la conduite de gaz de protection (12) afin d'amener le gaz de protection ait chalumeau à souder (4) en aval du réservoir de gaz de protection (7).

12. Dispositif selon l'une quelconque des revendications précédentes, caractérisé en ce que le réservoir de gaz de protection (7) est formé par un boudin tubulaire agencé autour du récipient de produit antiadhésif (6).

13. Dispositif selon l'une quelconque des revendications précédentes, caractérisé en ce que le réservoir de gaz de protection (7) est formé par la conduite (10) située entre la conduite de gaz de protection (12) et l'organe d'obturation (9).
